# EUROPÄISCHE PATENTSCHRIFT

(11) **EP 3 523 082 B1**
(45) Veröffentlichungstag und Bekanntmachung des Hinweises auf die Patenterteilung: **07.06.2023**
(21) Anmeldenummer: 17811824.6
(22) Anmeldetag: 21.09.2017
(51) Int. Cl.: B23K 26/354, B23K 26/08, B23K 26/352

(54) **VERFAHREN ZUM GRAVIEREN, MARKIEREN UND/ODER BESCHRIFTEN EINES WERKSTÜCKES MIT EINEM LASERPLOTTER UND LASERPLOTTER HIERFÜR**
METHOD FOR ENGRAVING, MARKING AND/OR INSCRIBING A WORKPIECE USING A LASER PLOTTER, AND LASER PLOTTER HEREFOR
PROCÉDÉ PERMETTANT DE RÉALISER UNE GRAVURE, UN MARQUAGE ET/OU UNE INSCRIPTION SUR UNE PIÈCE AU MOYEN D'UN TRACEUR LASER ET TRACEUR LASER ASSOCIÉ

(30) Priorität: 06.10.2016 AT 509022016
(43) Veröffentlichungstag der Anmeldung: 14.08.2019
(73) Patentinhaber: Trotec Laser GmbH, 4614 Marchtrenk (AT)
(72) Erfinder: HOFINGER, Andreas, 4712 Michaelnbach (AT)
(86) Internationale Anmeldenummer: PCT/AT2017/060237
(87) Internationale Veröffentlichungsnummer: WO 2018/064692

(56) Entgegenhaltungen:
- WO-A2-2015/176089
- DE-A1-102014 210 611
- JP-A- 2008 042 032

## Beschreibung

Die Erfindung betrifft ein Verfahren und einen Laserplotter zum Gravieren, Markieren und/oder Beschriften eines Werkstücks mit einem Laserplotter, bei dem in einem Gehäuse des Laserplotters eine bevorzugt jedoch mehrere, insbesondere zwei Strahlquellen in Form von Lasern eingesetzt werden, die bevorzugt abwechselnd auf das zu bearbeitende Werkstück einwirken, wobei das Werkstück auf einem Bearbeitungstisch definiert abgelegt wird und ein von der Strahlquelle abgegebener Laserstrahl über Umlenkelemente an zumindest eine Fokussiereinheit gesendet wird, von der der Laserstrahl in Richtung Werkstück abgelenkt und zur Bearbeitung fokussiert wird, wobei die Steuerung, insbesondere die Positionssteuerung des Werkstückes zum Laserstrahl über eine in einer Steuereinheit laufende Software erfolgt, sodass das Werkstück zeilenweise durch Verstellung eines Schlittens bearbeitet wird, wie dies in den Oberbegriffen der Ansprüche 1 und 7 beschrieben ist.

Bei Laserplottern wird das Laserlicht mit einer Fokussierlinse scharf gebündelt. Im Fokus des Laserstrahls entsteht dabei eine extrem hohe Leistungsdichte, mit der Werkstoffe geschmolzen oder verdampft, graviert, markiert oder beschriftet werden können. Dabei erfolgt die Bearbeitung, insbesondere die Gravur, zeilenweise, wobei die erste Zeile vorzugsweise von links nach rechts und die nächste darauf folgende Zeile von rechts nach links und dann wieder die nächste Zeile von links nach rechts usw. bearbeitet wird.

Dabei ist aus der WO 2015/176089 A2 ein Laserplotter bekannt, bei dem in einem Gehäuse des Laserplotters eine bevorzugt jedoch mehrere, insbesondere zwei Strahlquellen in Form von Lasern eingesetzt werden, die bevorzugt abwechselnd auf das zu bearbeitendes Werkstück einwirken, wobei das Werkstück auf einem Bearbeitungstisch definiert abgelegt wird und ein von der Strahlquelle abgegebener Laserstrahl über Umlenkelemente an zumindest eine Fokussiereinheit gesendet wird, von der der Laserstrahl in Richtung Werkstück abgelenkt und zur Bearbeitung fokussiert wird, wobei die Steuerung, insbesondere die Positionssteuerung des Werkstückes zum Laserstrahl über eine in einer Steuereinheit laufende Software erfolgt, sodass das Werkstück zeilenweise durch Verstellung eines Schlittens bearbeitet wird.

Weiters sind aus der DE 10 2014 210611 A1 und der JP 2008 042032 A Verfahren zum Beschleunigen des Gravurprozesses durch einen kontinuierlichen Übergang zwischen zwei Zeilen in bidirektionaler Bewegung offenbart.

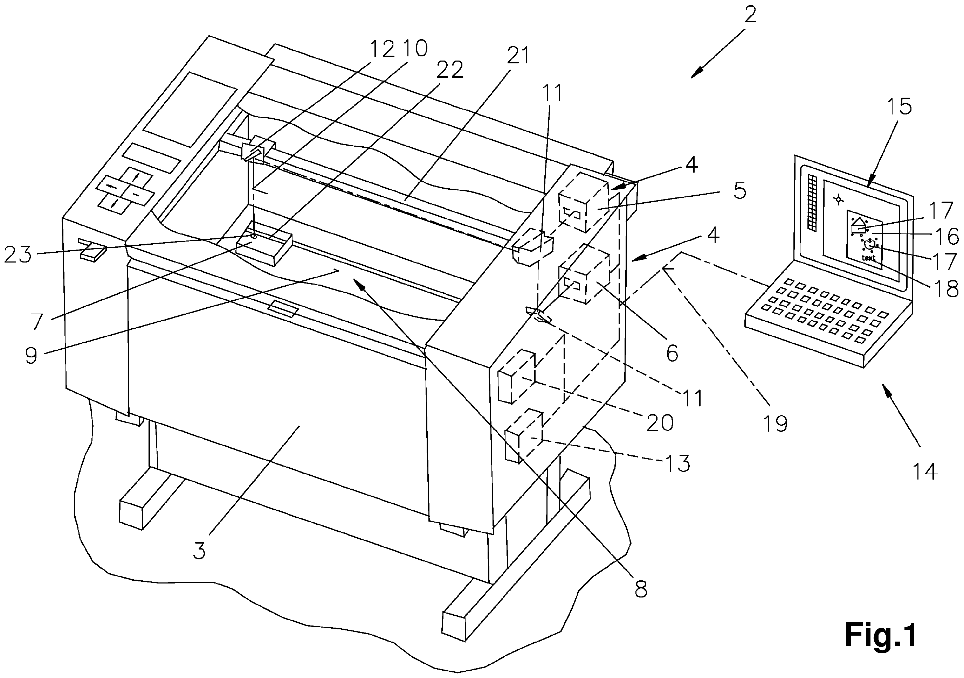

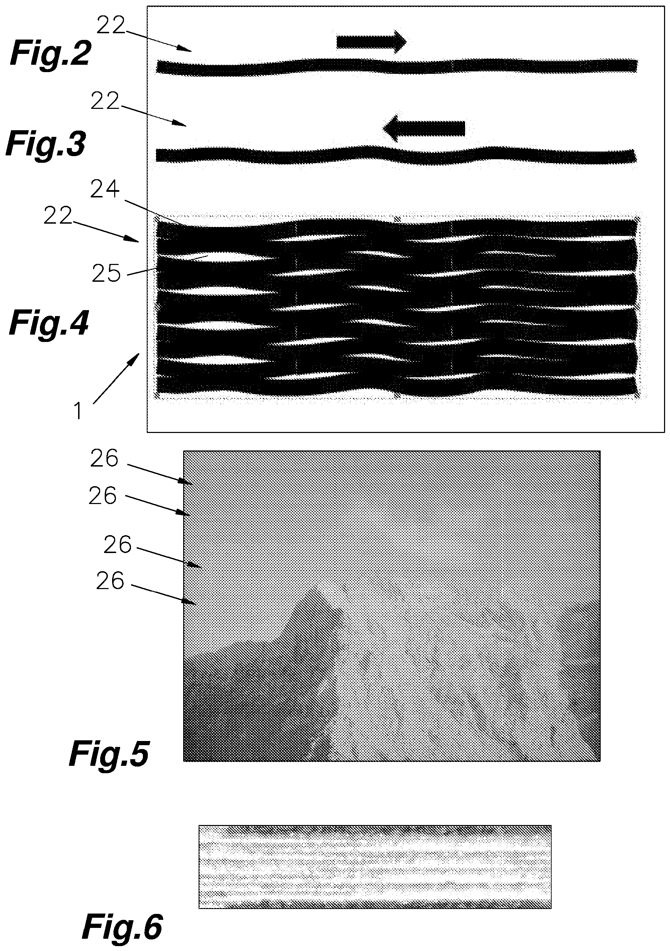

Dabei treten bei dem zum Stand der Technik zählenden Laserplottern Probleme mit mechanischen Streifen am Gravurbild (siehe Fig. 5) auf. Dabei können bestimmte Kombinationen aus Material, Laserquelle, insbesondere CO2-Laser oder YAG-Laser, eingestellter Leistung, verwendeter Linse, usw. zu unregelmäßigen vertikalen Streifen führen, wobei diese Probleme, insbesondere bei flächigen Gravuren auftreten. Besondere Probleme treten beispielsweise bei Verwendung eines Faserlasers bei einer Aluminiumgravur, einem Faserlaser bei Anlassbeschriften von Stahl oder aber auch bei einem CO2-Laser bei einer Gravur von Acryl auf. Die Ursache der Streifenbildung liegt darin, dass die tatsächliche Gravur um die Ideallinie schwingt, was aufgrund des mechanischen Aufbaus des Schlittens aufgrund des mechanischen Spieles nicht verhindert werden kann, wie dies in den Fig. 1 bis 6 veranschaulicht wurde.

Die Aufgabe der Erfindung liegt darin, ein Verfahren und einen Laserplotter zu schaffen, bei dem die Streifenbildung bei Gravur von flachen Gegenständen möglichst verhindert wird.

Die Aufgabe wird durch die Erfindung gelöst.

Die Aufgabe der Erfindung wird durch ein Verfahren zum Gravieren, Markieren und/oder Beschriften eines Werkstückes mit einem Laserplotter gelöst, bei dem von der Steuereinheit eine der Qualität der Gravur angepasste Ablaufsteuerung, bei der eine definierter Spotgröße zu Zeilenabstand und ein Gravur-Ablauf der abzuarbeitenden Zeilen festgelegt bzw. ermittelt wird, durchgeführt wird und die Fokussiereinheit am Schlitten entsprechend den definierten Parametern der Ablaufsteuerung angesteuert wird und der Gravur-Ablauf blockweise unidirektional erfolgt, wobei jeweils abwechselnd zumindest zwei Blöcke bearbeitet werden, sodass der Gravurablauf in einem Block immer gleich erfolgt.

Vorteilhaft ist hierbei, dass bei einer hochwertigen Gravur von der Steuereinheit eine spezielle Ablaufsteuerung ermittelt und festgelegt wird, bei der die oftmals auftretenden leichten Streifenbildungen am Gravurbild verhindert werden, wobei die Bearbeitungszeit nur unwesentlich erhöht wird.

Dies wird insofern erreicht, da bei dem durchgeführten Ablauf möglichst vermieden wird, dass zwei parallel verlaufenden Zeilen hintereinander abgearbeitet werden, d.h., dass je weniger derartige zeilenweise Bearbeitungsvorgänge in einem Gravurbild zustande kommen, umso höher wird die Qualität des Gravurbildes, da keinerlei Streifenbildungen durch keine bzw. wenige Überlappungen und Freiräumen bei den Zeilen erzeugt werden.

Weiters wird erreicht, dass durch die abwechselnde Blockbearbeitung somit wiederum eine in jeder Richtung stattfindende Gravur durchgeführt wird und somit die Bearbeitungszeit in etwa jener der standardmäßigen zeilenweise aufeinanderfolgenden bidirektionalen Gravur-Ablauf entspricht, d.h., dass bei der erfindungsgemäßen Lösung die Gravur-Richtung blockweise wechselt, sodass in einem Block niemals zwei Zeilen mit unterschiedlicher Gravurrichtung vorhanden sind.

Ein weiterer Vorteil liegt darin, dass der Nutzer eine Auswahl der Qualität beispielsweise Standard, verbesserte Qualität, höchste Qualität, einstellen kann, sodass die Steuereinheit entsprechende Abläufe auswählt. Beispielsweise wird bei der Wahl Standard eine bidirektionale Zeile für Zeile ablaufende Gravur gewählt, wogegen bei verbesserter Qualität Blöcke festgelegt werden und immer zwei benachbarte Blöcke alternierend abgearbeitet werden, wogegen bei der höchsten Qualität wiederum Blöcke definiert werden, wobei alle Blöcke abwechselnd mit jeweils einer Zeile hintereinander oder pseudozufällige Blöcke abgearbeitet werden.

Von Vorteilen sind die Maßnahmen, bei denen jeder Block aus zumindest zwei, insbesondere vier bis zehn Zeilen gebildet wird. Dadurch wird erreicht, dass je nach Größe der herzustellenden Graphik die Steuereinheit die optimale Blockgröße, insbesondere Zeilenanzahl, festlegen kann, um die schnellstmögliche Gravur mit der bestmöglichen Qualität zu erzielen.

Es sind aber auch die Maßnahmen von Vorteil, bei denen nach vollständiger Abarbeitung der zumindest zwei Blöcke von der Steuereinheit die nächsten Blöcke abgearbeitet werden, wobei hierzu die nächsten Blöcke oder pseudozufällige Blöcke ausgewählt werden. Dadurch wird erreicht, dass eine vollständige Gravur gewährleistet ist, wobei über die Auswahl der nächsten Blöcke Einfluss auf den Wärmehaushalt und/oder die Qualität der Gravur genommen werden kann.

Vorteilhaft sind aber auch die Maßnahmen, bei denen die Abarbeitung der Zeilen innerhalb der Blöcke von oben nach unten oder von unten nach oben oder pseudozufällig erfolgt. Dadurch wird erreicht, dass die Qualität durch entsprechende Auswahl des Ablaufes erhöht werden kann, da je nach zu gravierendem Material entsprechende Abläufe festgelegt werden können. Damit kann in gewisser Weise die Wärmeeinbringung auf das Material gesteuert werden, da bei größeren Abständen der dazwischenliegenden Zeilen die Erwärmung geringer ist.

Von Vorteil sind die Maßnahmen, bei denen die Abarbeitung einer Zeile von links nach rechts oder rechts nach links oder mit wechselnder Gravur-Richtung erfolgt. Dadurch wird erreicht, dass optimal auf die Qualität bzw. das Material Rücksicht genommen werden kann.

Es sind aber auch die Maßnahmen von Vorteil, bei denen alle festgelegten Blöcke von oben nach unten abgearbeitet werden, wobei beispielsweise zuerst jede 1. Zeile von jedem Block bearbeitet wird, worauf die 2. Zeile jedes Blockes usw. graviert wird. Dadurch wird erreicht, dass zwischen den Blöcken immer die gleiche Schlittenverstellung durchgeführt wird, sodass gegebenenfalls die Schlittenverstellgeschwindigkeit erhöht werden kann.

Weiters wird die Aufgabe der Erfindung auch durch einen Laserplotter gelöst, bei dem die Steuereinheit zum Durchführen des Verfahrens nach einem oder mehreren der Ansprüche 1 bis 6 ausgebildet ist. Vorteilhaft ist dabei, dass dabei mit einem handelsüblichen Laserplotter das erfindungsgemäße Verfahren verwirklicht werden kann, sodass die Einflüsse zur Streifenbildung verhindert werden können.

Von Vorteil ist auch eine Ausbildung, bei der die Steuereinheit zu einer der Qualität der Gravur angepassten Ablaufsteuerung, bei der ein definiertes Verhältnis von Spotgröße zu Zeilenabstand und ein Gravurablauf der abzuarbeitenden Zeilen festlegbar bzw. ermittelbar ist, ausgebildet ist und die Fokussiereinheit am Schlitten entsprechend den definierten Parametern der Ablaufsteuerung ansteuerbar ist. Dadurch gekennzeichnet, dass dadurch ein spezieller Ablauf der Gravur vorgenommen werden kann, sodass durch die schwingende Zeilengravur Überlappungen und Freiräume reduziert bzw. vermieden werden.

Schließlich ist auch eine Ausbildung von Vorteil, bei der die Steuereinheit zum Abarbeiten von Blöcken ausgebildet ist. Dadurch wird erreicht, dass innerhalb eines Blockes immer nur eine Gravurrichtung ermöglicht wird, jedoch in beiden Gravurrichtungen das Werkstück bearbeitet, insbesondere graviert werden kann.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: eine schaubildliche Darstellung eines Laserplotters, in vereinfachter, schematischer Darstellung;
- Fig. 2: eine Schwingung eines Gravurablaufes einer Zeile von links nach rechts, in vereinfachter, schematischer Darstellung;
- Fig. 3: eine Schwingung eines Gravurablaufes einer Zeile von rechts nach links, in vereinfachter, schematischer Darstellung;
- Fig. 4: eine Zusammenschau einer zeilenweise Gravur von links nach rechts und rechts nach links aus dem Stand der Technik, in vereinfachter schematischer Darstellung;
- Fig. 5: eine Bildgrafik mit einem Gravurablauf aus dem Stand der Technik zur Darstellung der Streifen;
- Fig. 6: eine mikroskopische Vergrößerung der Gravur nach Fig. 5 zur Veranschaulichung der auftretenden Überlappungen und Freiräume beim Gravurablauf aus dem Stand der Technik;
- Fig. 7: ein erfindungsgemäßer Gravurablauf zur Vermeidung der Streifen mit blockweiser Ablaufsteuerung;
- Fig. 8: ein weiteres Ausführungsbeispiels eines erfindungsgemäßen blockweisen Gravurablauf mit pseudozufälliger Reihenfolge der Blöcke und Zeilen.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

In den Fig. 1 bis 4 ist Gravurablauf 1 aus dem Stand der Technik gezeigt, bei dem die Probleme der Streifenbildung bei einem Laserplotter 2 veranschaulicht werden soll. Gemäß Fig. 1 ist ein aus dem Stand der Technik bekannter Laserplotter 2 dargestellt, bei dem in einem Gehäuse 3 zumindest eine, insbesondere zwei Strahlenquellen 4 in Form von Lasern 5, 6 angeordnet und betrieben werden. Die Laser 5 und 6 wirken vorzugsweise abwechselnd auf das zu bearbeitende Werkstück 7 ein, wobei das Werkstück 7 in einem Bearbeitungsbereich 8 des Laserplotters 2, insbesondere auf einem Bearbeitungstisch 9, positioniert ist. Ein von der Strahlenquelle 4 abgegebener Laserstrahl 10 wird über Umlenkelemente 11 an zumindest eine verfahrbare Fokussiereinheit 12 gesendet, von der der Laserstrahl 10 in Richtung Werkstück 7 abgelenkt wird und zur Bearbeitung fokussiert wird. Die Steuerung, insbesondere die Positionssteuerung des Laserstrahls 10 zum Werkstück 7 erfolgt über eine in einer Steuereinheit 13 laufende Software, wobei an einer externen Komponente 14, insbesondere an einem Anzeigeelement 15 in Form eines Computers 15 oder einem Steuergerät, ein Bearbeitungsjob 16 mit einer Grafik 17 und/oder ein Text 18, erstellt und/oder geladen wird, welcher an die Steuereinheit 13 des Laserplotters 2 über eine Datenverbindung 19 übergeben wird, die aus einer hinterlegten Datenbank 20 eine Konvertierung der übergebenen Daten, insbesondere des Bearbeitungsjobs 16 mit der Grafik 17 und/oder des Textes 18, zum Steuern der einzelnen Elemente des Laserplotters 2 vornimmt.

Bei einem Gravurvorgang am Werkstück 7 wird die Fokussiereinheit 12 entlang eines Schlittens 21 bewegt, sodass der Laserstrahl eine Zeile 22 am Werkstück 7 mit einer vorgegebene Spotgröße 23 des Lasers 4 oder 5 erzeugt, wie dies schematisch in den Fig. 2 und 3 dargestellt ist. Aufgrund des mechanischen Aufbaus und somit der damit verbundenen mechanischen Spiele schwingt der Laserstrahl 10 bzw. die Spotpunkt um die gerade Linie. Dabei verhält sich die Schwingung von links nach rechts, gemäß Fig. 2, anders als die Schwingung von rechts nach links, gemäß Fig. 2, sodass sich ein wiederholendes Musters aus Überlappungen 24 und Freiräumen 25 im Gravurablauf 1 , gemäß Fig. 3, ergibt, die als Streifen 26 im Gravurbild, gemäß Fig. 5, wahrgenommen werden. Gemäß Fig. 6 ist eine mikroskopische Vergrößerung der Bildgravur von Fig. 5 dargestellt, aus der mit den dunklen Linien die Lasergravur ersichtlich ist, die in bestimmten Bereich zusammen laufen. Wie in den Darstellungen, insbesondere der Fig. 4 bis 6, ersichtlich, ergibt sich ein wiederholendes Muster aus Überlappungen 24 und Freiräumen 25, die als Streifen 26 wahrgenommen werden.

Eine weitere Ursache liegt darin, dass sich eine Laserquelle durch Temperaturschwankungen ausdehnt, wodurch sich die abgegebene Laserleistung geringfügig ändert, wobei diese Änderung dabei nicht monoton ist, sondern zeigt ein Schwingungsverhalten. Bei Gravuren die lange Zeit dauern und gleichzeitig große, einfarbige Bereiche aufweisen, können diese Schwankungen als Streifen 26 sichtbar werden. Insbesondere ist das dann der Fall, wenn sich das bearbeitete Material, also Werkstück 7, im gewählten Leistungsbereich nichtlinear verhält, d.h., geringe Schwankungen in der Laserleistung führen zu starken Schwankungen des Ergebnisses am Material.

Eine einfache Methode zur Vermeidung von Streifen liegt in der Durchführung einer Unidirektionalen Gravur, sodass sich das Schwingungsverhalten Zeile 22 für Zeile 22 in gleicherweise aneinander fügt und somit keine Überlagerungen 24 oder Freiräume 25 entstehen, d.h., dass der Laserplotte 2 immer nur in einer Richtung beispielsweise von links nach rechts, den Laserstrahl 10 zur Bildung der Gravur aktiviert und bei der Rückstellung von rechts nach links der Laserstrahl 10 deaktiviert wird, worauf anschließend wiederum eine Gravur von links nach rechts erfolgen kann. Der ordnungshalber wird darauf hingewiesen, dass dies selbstverständlich auch umgekehrt sein kann, also der Laserstrahl bei einer Bewegung der Fokuseinheit 12 von rechts nach links aktiviert ist und von links nach rechts deaktiviert ist.

Diese Gravurmethode hat jedoch einen großen Nachteil, nämlich dass die Zeit für die Lasergravur verdoppelt bzw. annähernd verdoppelt wird, da es möglich ist, dass unterschiedliche Verstellgeschwindigkeiten verwendet werden kann, d.h., dass die Gravurgeschwindigkeit sehr langsam ist, jedoch die Rückstellung sehr schnell erfolgen kann.

Erfindungsgemäß ist zum Vermeiden der Streifen 26 nunmehr vorgesehen, dass, nicht wie aus dem Gravurablauf 1 des Stand der Technik bekannt, die Zeilen 22 in einen strikten Reihenfolge, nämlich zeilenweise Zeile 22 für Zeile 22 abgearbeitet werden, sondern erfindungsgemäß werden die Zeilen 22 je nach gewünschter Korrektur bzw. Qualität in alternativen Reihenfolgen abgearbeitet.

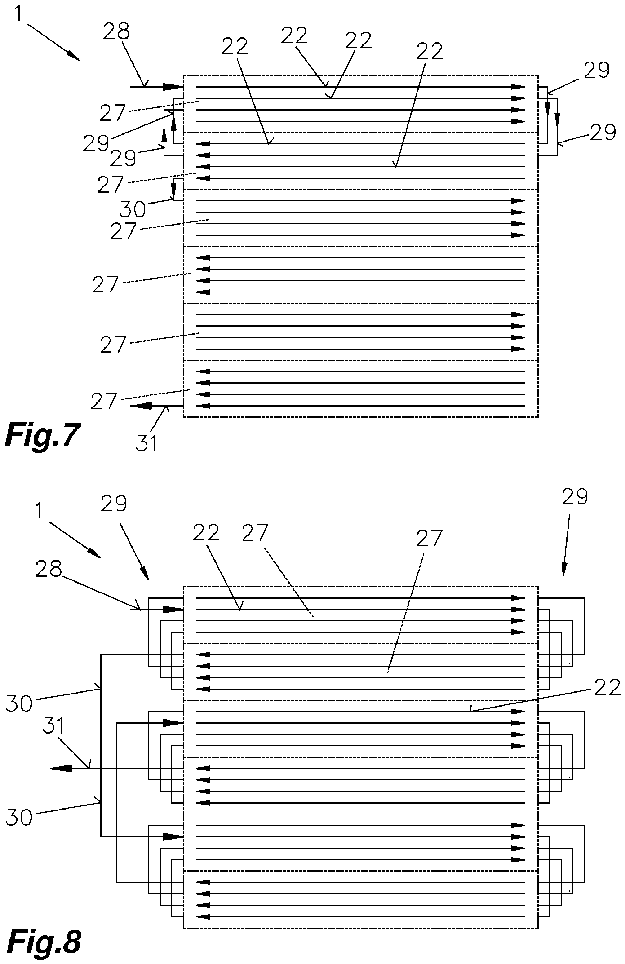

Dabei wird vor dem Start des Gravurablaufes 1 von der Steuereinheit 13 eine Analyse der Grafik 17 und/oder Textes 18 durchgeführt und entsprechende Paramater, wie beispielsweise Spotgröße 23, Gravur-Geschwindigkeit, usw. definiert. Gleichzeitig teilt die Steuereinheit den Gravurbereich, also die Grafik 17 und/oder Text 18, in Blöcke 27 auf, wobei jeder Block eine bestimmte Anzahl an Zeilen 22 beinhaltet, wie dies schematisch in Fig. 7dargestellt ist. In dem gezeigten Ausführungsbeispiel wurde also die in Fig. 5 gezeigte Grafik 17 in eine Vielzahl von Blöcken 27, wobei zum veranschaulichen lediglich sechs Blöcke 27 dargestellt wurden, aufgeteilt, wobei jeder Block 27 jeweils vier Zeilen 22 beinhaltet. Der Ordnung halber wird erwähnt, dass natürlich mehr oder weniger Zeilen 22 als die dargestellten zur Veranschaulichung dienenenden vier Zeilen 22 beinhaltet sein können. Wie am Gravurablauf 1 gemäß Fig. 7 ersichtlich, werden in den Blöcken 27 immer nur in einer Richtung graviert, d.h., dass der erste Block 27 von links nach rechts graviert wird, wogegen der zweite Block 27 von rechts nach links usw. graviert wird. Dabei startet die Gravur am Startpunkt 28, sodass der Schlitten 21 mit der Fokussiereinheit 12 entsprechend positioniert wird, worauf die Fokussiereinheit 12 bei stillstehenden Schlitten 21 entlang des Schlittens 21, also von links nach rechts, bis zum Ende der Zeile 22 bei aktiviertem Laserstrahl 10 verfahren wird und somit die erste Zeile 22 erzeugt wurde. Anschließend wird nunmehr der Schlitten 21 auf die erste Zeile 22 des zweiten Blockes 27 verstellt, wie dies schematisch außerhalb des Gravurablaufes 1 durch Verstelllinien 29 für den Schlitten 21 dargestellt ist. Nachdem in den ersten beiden Blöcken 27 jeweils die erste Zeile 22 in unterschiedlichen Gravurrichtung hergestellt wurde, wird der Schlitten 21 mit der Fokussiereinheit 12 auf die zweite Zeile 22 des ersten Blockes 27 positioniert und der Ablauf beginnt vom Neuem für die zweite, dritte und vierte Zeile 22 usw.

Ist im zweiten Block 27 die letzte Zeile 22 abgearbeitet, so erfolgt nunmehr ein Blockwechsel 30, wie dies schematisch mit einer Blockwechsellinie dargestellt ist, sodass die nächsten beiden Blöcke 27, nämlich der dritte und vierte Block 27, gemäß dem zuvor beschriebenen Ablauf, abgearbeitet wird. Hierbei ist zu erwähnen, dass nicht zwingend immer der nächste Block 27 beim Blockwechsel 30 ausgewählt wird, sondern dass beispielsweise die nächsten beiden Blöcke 27 ausgelassen werden und die Gravur mit den sechsten und siebenten Block 27 fortfährt, damit das Material des zu gravierenden Werkstück 7 abkühlen kann. Die ausgelassenen Blöcke 27 werden anschließend oder zu einen entsprechenden Zeitpunkt abgearbeitet, sodass am Ende der Gravur alle Blöcke 27 abgearbeitet wurden.

Bei diesem in Fig. 7 dargestelltem Gravurablauf 1 erfolgt der Gravurablauf 1 Blockweise unidirektional erfolgt, wobei jeweils abwechselnd zwei Blöcke 27 bearbeitet werden. Der große Vorteil dieses Gravurablaufes 1 liegt darin, dass die Gravur wiederum in jeder Richtung, also von links nach rechts und von rechts nach links, durchgeführt wird, sodass nur eine minimale Zeitverlängerung der Gravur, die durch das größere Verstellen des Schlittens 21 verursacht wird, erfolgt, jedoch keine zeilenweise Gravurablauf 1, wie aus dem Stand der Technik bekannt, durchgeführt wird. Wie nunmehr beim erfindungsgemäßen Gravurablauf 1 ersichtlich, werden die zu den Streifen 26 führenden Überlappungen 24 und Freiräume 25 durch die blockweise Abarbeitung vermieden, sodass die keine Streifen 26 bei einer derartigen Gravur mehr vorhanden sind.

Bei der blockweisen Abarbeitung ist es auch möglich, dass alle festgelegten Blöcke 27 von oben nach unten oder umgekehrt abgearbeitet werden, wobei beispielsweise zuerst jede 1. Zeile 22 von jedem Block 27 bearbeitet werden, worauf die 2.Zeile 22 jedes Blockes 27 usw. graviert wird. Auch ist es möglich, dass die Blöcke 27 pseudozufällig ausgewählt und abgearbeitet werden (nicht dargestellt). Hierbei ist es selbstverständlich auch möglich, dass die Abarbeitung der Zeilen 22 innerhalb der Blöcke 27 von oben nach unten oder von unten nach oben oder pseudozufällig erfolgt kann.

Man kann also sagen, dass erfindungsgemäß vorgesehen ist, dass von der Steuereinheit 13 eine der Qualität der Gravur angepasste Ablaufsteuerung, bei der ein definiertes Verhältnis einer Spotgröße 23 zu Zeilenabstand und ein Gravur-Ablauf 1 der abzuarbeitenden Zeilen 22 festgelegt bzw. ermittelt wird, durchgeführt wird und die Fokussiereinheit 12 am Schlitten 21 entsprechend den definierten Parametern der Ablaufsteuerung angesteuert wird, d.h., dass aufgrund der Größe der Spotgröße 23 und einem eingestellten oder automatisch daraus berechneten Zeilenabstand die Steuereinheit 13 eine Blockgröße ermitteln kann und somit die Anzahl der benötigten Blöcke 27 bei vorgegebener Grafik 17 oder Text 18 ermitteln kann. Wird beispielsweise für eine höhere Gravurqualität ein anderes Verhältnis der Spotgröße 23 bzw. Pixelgröße verwendet, so verringert sich der Zeilenabstand zwischen den Zeilen 22, sodass die Größe des Blockes 27 verändert wird und somit für den Gravurablauf 1 mehr oder weniger Blöcke 27 benötigt werden. Dabei ist es möglich, dass der Nutzer die Spotgröße 23 und gegebenenfalls den Zeilenabstand über einen Parameter einstellen kann oder dass aufgrund von definierten Qualitätseinstellungen, beispielsweise Standard, verbesserte Qualität, hohe Qualität, entsprechende Parameter für die Spotgröße 23 und/oder Zeilenabstand in einem Speicher hinterlegt sind, die nach Auswahl geladen und für die Analyse herangezogen werden.

In Fig. 8 ist ein pseudozufälliger Ablauf für die Abarbeitung der Zeilen 22 in den Blöcken 27 gezeigt, wobei der wesentliche Vorteil darin liegt, dass bei diesem Ablauf niemals zwei nebeneinander liegende Zeilen 22 hintereinander abgearbeitet werden. Gestartet wird gemäß Startpunkt 28 in der zweiten Zeile 22 des ersten Blockes 27 von links nach rechts graviert, worauf die vierte Zeile 22 des zweiten Blockes 27 von rechts nach links graviert wird. Anschließend erfolgt die Gravur der vierten Zeile 22 des ersten Blockes 27, der dritten Zeile 22 des zweiten Blockes 27, dritte Zeile 22 des ersten Blockes, zweite Zeile 22 des zweiten Blockes und von dort auf die erste Zeile 22 des ersten Blockes 22, worauf als letzte Zeile 22 die erste Zeile 22 des zweiten Blockes 27 graviert wird. Nachdem alle Zeilen 22 abgearbeitet wurden wird der Schlitten 21 gemäß dargestellter Blockwechsel 30 wiederum auf die zweite Zeile 22 des nächsten ab zuarbeiteten Blockpaar und zwar in diesem pseudozufälligen Ablauf auf den fünften Block 27, sodass nunmehr die Blöcke 27 fünf und sechs abgearbeitet werden. Im Anschluss wird vom sechsten Block 26 auf das Blockpaar der Blöcke 27 drei und vier gewechselt, sodass die Endposition 31 in der ersten Zeile 22 des vierten Blockes 27 erreicht ist.

Bevorzugt haben sich vier bis sechs Zeilen 22 pro Block 27 bei den verschiedensten Versuchen herausgestellt, bei dem man die beste Qualität und die schnellstmögliche Gravurzeit erreicht. Somit kann durch Vorgabe der Zeilen 22 in einem Block 27, welche vom Nutzer vorzugsweise in der Steuereinheit 13 als Parameter einstellen kann, eine einfache Analyse bzw. Berechnung der Anzahl der benötigten Blöcke 27 für eine zu bearbeitende Grafik 17 und/oder Text 18 durchgeführt werden. Auch besonders vorteilhaft hat sich herausgestellt, dass paarweise zusammengefasste Zweierblöcke sehr gute und hochwertige Gravuren liefert.

Zur Vermeidung der Streifen 26 ist es auch möglich, dass eine pseudozufällige Zeilenauswahl anstelle der Blöcke oder innerhalb der Blöcke durchgeführt wird, wobei dabei sichergestellt wird, dass nicht aufeinanderfolgende Zeilen hintereinander abgearbeitet werden. Insbesondere ist die Gravurrichtung links/rechts zu berücksichtigen, wodurch die Entstehung unterschiedlich großer unidirektionaler Überlappungen 24 und/oder Freiräume 25, die sich als horizontale, unregelmäßige Streifen bemerkbar machen können, vermieden werden.

Es ist auch ein vorgehen möglich, bei dem beispielsweise alle geraden Zeilen 22 zuerst, und dann allen ungeraden Zeilen 22 bearbeitet werden. Die Erscheinung eines Streifens kann davon abhängen, ob die darüber liegende und darunter liegende Zeile 22 vorher oder nachher graviert wurden, insbesondere aufgrund von thermische Effekte, usw.. Wenn z.B. alle Zeilen 22 eines Blockes 27 von oben nach unten graviert werden, so hat jede Zeile 22 einen zeitlichen Vorgänger, und alle Zeilen 22 außer der letzten Zeile 22 des Blockes 27 einen zeitlichen Nachfolger. Dies kann zu horizontalen, schmalen Linien bzw. Streifen 26 führen, ausgelöst durch die Sonderstellung der letzten Zeile 22 jedes Blockes 27.

In Versuchen hat sich herausgestellt, dass eine unidirektionale Gravur für optimale Verringerung von vertikalen Streifen 26 sorgt. Vertikale Streifen 26 (nicht dargestellt) werden durch mechanische Schwingungen durch unidirektionale oder blockweise unidirektionale Gravur verringert. Prinzipiell können diese Streifen 26 zwar noch in den Berührungspunkten der Blöcke 27 sichtbar sein, allerdings wird mit steigender Blockgröße auch die Streifenintensität geringer.

Blöcke 27 sind dabei Zonen aufeinanderfolgender Zeilen 22 mit vorzugsweise gleicher Gravurrichtung, wobei die Blockgröße >= 2 Zeilen 22 ist. Dabei ist es möglich, dass die Blöcke 27 unterschiedlicher Größe z.B. Anpassung der Zeilenanzahl an den Job bzw. der Gravur, Verringerung von Periodizität, aufweisen kann. Periodizität kann in Kombination mit anderen periodischen Eigenschaften des Gerätes bzw. Laserplotters 2, wie beispielsweise Riementeilung, Encoderauflösung, Motormomente, usw. zu Moirè-Effekten führen, wobei unter Moirè-Effekten typischerweise breite, horizontale, periodische Streifen 27 zu verstehen ist.

Wie bereits erwähnt, ist es auch möglich dass die Reihenfolge der Blocks 27 verändert werden kann. Beispielsweise können alle der Reihe nach (gleichmäßiger Fortschritt, einfache verständlich für den Benutzer beim Zuschauen) oder dass kleinere Gruppen vorab fertigstellen gestellt werden, sodass laufende Qualitätskontrolle möglich, z.B. Prüfung der eingestellten Laserleistung sind. Auch ist eine pseudozufällige Verteilung mögliche, die bevorzugt bei CO2-Laserröhren Vorteile bringt. CO2-Laserröhren können ein Aufwärmverhalten zeigen, durch das die Laserleistung um einen Mittelwert schwankt. Die Schwingungsdauer liegt dabei im Bereich von Minuten. Bei Gravuren die sehr lange dauern, können sich diese Schwankungen als horizontale, ungleichmäßig breite Streifen zeigen, die durch die pseudozufällige Verteilung sehr stark reduziert wird.

Auch kann die Reihenfolge innerhalb des Blockes 27 verändert werden, sodass beispielsweise von oben nach unten, d.h. von jedem Block wird zuerst die erste, dann die zweite, ... Zeile 22 graviert oder alle geraden, dann alle ungeraden oder pseudozufällige Auswahl. Die Erscheinung einer bestimmten Zeile 22 kann davon abhängen, ob die darüber liegende und darunter liegende Zeile 22 vorher oder nachher graviert wurden. Wenn z.B. alle Zeilen eines Blockes von oben nach unten graviert werden, so hat jede Zeile einen zeitlichen Vorgänger, und alle Zeilen außer der letzten einen zeitlichen Nachfolger. Dies kann zu horizontalen, schmalen Linien führen, ausgelöst durch die (periodische) Sonderstellung der letzten Zeile 22 jedes Blockes, was vermieden werden kann.

Auch ist es möglich, dass Mehrfachgravur einer Zeile 22 des Blockes 26 durchgeführt wird, wobei beispielsweise die erste abgearbeitete Zeile 22 (nicht zwingend die oberste Zeile 22) wird auch zu einem späteren Zeitpunkt (insbesondere als letzte Zeile 22 innerhalb des Blockes 26) noch einmal abgearbeitet. Sowohl die erste als auch die (zeitlich) letzte Zeile 22 eines Blockes 26 haben eine Sonderstellung; diese Periodizität kann sich in schmalen, horizontalen Linien äußern. Von Vorteil ist hier, dass die örtlich idente Zeile 22 beide male mit gleichen Parametern (Geschwindigkeit, Richtung, ...) abgearbeitet wird, und deshalb keine Artefakte innerhalb der Zeile 22 auftreten (z.B. Überlappungen durch Umkehrspiel). Dies geht mit einem geringen Zeitverlust einher.

Es ist aber auch ein Vorgehen möglich, bei dem überlappende Blöcke 26 graviert werden, d.h., dass die Gravur einer einzelnen Zeile 22 sowohl von links als auch von rechts erfolgt, wobei jeweils nur ausgewählte Teile der Zeile abgearbeitet werden. Die Streifenintensität wird weiter verringert, da mögliche Streifen 26 nicht mehr zwischen n-Block 27 und n+1 - Block 27 auftreten, sondern zwischen n-Block 27 und der geteilten Zeile 22, sowie zwischen der geteilten Zeile 22 und n+-Block 27, also verteilt und dadurch weniger sichtbar über einen doppelt so großen Bereich. Der Zeitverlust ist geringer, die Qualität kann allerdings etwas schlechter als sein.

Wesentlich bei der erfindungsgemäßen Lösung ist, dass von der Steuereinheit 13 eine der Qualität der Gravur angepasste Ablaufsteuerung, bei der eine definierter Spotgröße 23 zu Zeilenabstand und ein Gravurablauf 1, der wie zuvor beschrieben unterschiedlich ablaufen kann, der abzuarbeitenden Zeilen 22 ermittelt bzw. durchgeführt wird und die Fokussiereinheit 12 am Schlitten 21 entsprechend den definierten Parametern der Ablaufsteuerung angesteuert wird, sodass die Streifenbildung am Gravurbild vermieden oder stark reduziert wird.

Der Ordnung halber sei abschließend darauf hingewiesen, dass zum besseren Verständnis des Aufbaus des Gravurablaufes 1 und deren Komponenten bzw. dessen Bestandteile teilweise unmaßstäblich und/oder vergrößert und/oder verkleinert und vor allem nur schematisch dargestellt wurden.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen bilden.

## Patentansprüche

1. Verfahren zum Gravieren, Markieren und/oder Beschriften eines Werkstückes (7) mit einem Laserplotter (2), bei dem in einem Gehäuse (3) des Laserplotters (2) eine bevorzugt jedoch mehrere, insbesondere zwei Strahlquellen (4) in Form von Lasern (5,6) eingesetzt werden, die bevorzugt abwechselnd auf das zu bearbeitende Werkstück (7) einwirken, wobei das Werkstück (7) auf einem Bearbeitungstisch (9) definiert abgelegt wird und ein von der Strahlquelle (4) abgegebener Laserstrahl (10) über Umlenkelemente (11) an zumindest eine Fokussiereinheit (12) gesendet wird, von der der Laserstrahl (10) in Richtung Werkstück (7) abgelenkt und zur Bearbeitung fokussiert wird, wobei die Steuerung, insbesondere die Positionssteuerung des Werkstückes (7) zum Laserstrahl (10) über eine in einer Steuereinheit (13) laufende Software erfolgt, sodass das Werkstück (7) zeilenweise durch Verstellung eines Schlittens (21) bearbeitet wird, **dadurch gekennzeichnet**, dass_von der Steuereinheit (13) eine der Qualität der Gravur angepasste Ablaufsteuerung, bei der ein definiertes Verhältnis einer Spotgröße (23) zu Zeilenabstand und ein Gravurablauf (1) der abzuarbeitenden Zeilen (22) ermittelt bzw. durchgeführt wird und die Fokussiereinheit (12) am Schlitten (21) entsprechend den definierten Parametern der Ablaufsteuerung angesteuert wird und der Gravurablauf (1) blockweise unidirektional erfolgt, wobei jeweils abwechselnd zumindest zwei Blöcke bearbeitet werden und wobei die Gravur-Richtung blockweise wechselt.

2. Verfahren nach Anspruch 1, **dadurch gekennzeichnet, dass** jeder Block (27) aus zumindest zwei, insbesondere vier bis zehn Zeilen (22) gebildet wird.

3. Verfahren nach einem der vorhergehenden Ansprüche 1 oder 2, **dadurch gekennzeichnet, dass** nach vollständiger Abarbeitung der zumindest zwei Blöcke (27) von der Steuereinheit (13) die nächsten Blöcke (27) abgearbeitet werden, wobei hierzu die nächsten Blöcke (27) oder pseudozufällige Blöcke (27) ausgewählt werden.

4. Verfahren nach einem der vorhergehenden Anspruch 1 bis 3, **dadurch gekennzeichnet, dass** die Abarbeitung der Zeilen (22) innerhalb der Blöcke (27) von oben nach unten oder von unten nach oben oder pseudozufällig erfolgt.

5. Verfahren nach einem der vorhergehenden Anspruch 1 bis 4, **dadurch gekennzeichnet, dass** die Abarbeitung einer Zeile (22) von links nach rechts oder rechts nach links oder mit wechselnder Gravurrichtung erfolgt.

6. Verfahren nach einem der vorhergehenden Anspruch 1 bis 5, **dadurch gekennzeichnet, dass** alle festgelegten Blöcke (27) von oben nach unten abgearbeitet werden, wobei beispielsweise zuerst jede erste Zeile (22) von jedem Block (27) bearbeitet wird, worauf die zweite Zeile (22) jedes Blockes (27) usw. graviert wird.

7. Laserplotter (2) mit einem Bearbeitungsbereich (8) zum Positionieren eines Werkstückes (7), zumindest einer vorzugsweise jedoch zwei Strahlenquellen (4) in Form von Lasern (5,6), mit entsprechenden Umlenkelementen (11) und einer vorzugsweise verfahrbaren Fokussiereinheit (12) und einer Steuereinheit (13) zum Steuern der einzelnen Elemente, insbesondere einem Schlitten (21) mit daran verfahrbar angeordneten Fokussiereinheit (12), **dadurch gekennzeichnet, dass** die Steuereinheit (13) zum Durchführen des Verfahrens nach einem oder mehreren der Ansprüche 1 bis 6 ausgebildet ist.

8. Laserplotter (2) nach Anspruch 7, **dadurch gekennzeichnet, dass** die Steuereinheit (13) zu einer der Qualität der Gravur angepassten Ablaufsteuerung, bei der ein definiertes Verhältnis einer Spotgröße (23) zu Zeilenabstand und ein Gravurablauf (1) der abzuarbeitenden Zeilen (22) festlegbar bzw. ermittelbar ist, ausgebildet ist und die Fokussiereinheit (12) am Schlitten (21) entsprechend den definierten Parametern der Ablaufsteuerung ansteuerbar ist.

9. Laserplotter (1) nach Anspruch 7 oder 8, **dadurch gekennzeichnet, dass** die Steuereinheit (13) zum Abarbeiten von Blöcken (27) ausgebildet ist.

## Claims

1. Method for engraving, marking and/or lettering a workpiece (7) with a laser plotter (2), in which in a housing (3) of the laser plotter (2) one, but preferably several, in particular two beam sources (4) in the form of lasers (5,6) are used, which act preferably in alternating fashion on the workpiece (7) to be processed, wherein the workpiece (7) is deposited in a defined manner on a processing table (9) and a laser beam (10) emitted by the beam source (4) sent via deflecting elements (11) to at least one focusing unit (12) from which the laser beam (10) is deflected in the direction of the workpiece (7) and focused for machining, wherein the control, in particular the position control, of the workpiece (7) relative to the laser beam (10) is effected via software running in a control unit (13), so that the workpiece (7) is machined line by line by adjustment of a carriage (21), **characterised in that** from the control unit (13) a sequence control adapted to the quality of the engraving, in which a defined ratio of a spot size (23) to the inter-line distance and an engraving sequence (1) of the lines to be processed (22) is determined or carried out, respectively, and the focusing unit (12) on the carriage (21) is controlled in accordance with the defined parameters of the sequence control, and the engraving sequence (1) is carried out unidirectionally block by block, wherein in each case at least two blocks are processed in alternating fashion and wherein the engraving direction changes from block to block.

2. Method according to claim 1, **characterised in that** each block (27) is formed from at least two, in particular four to ten lines (22).

3. Method according to one of the preceding claims 1 or 2, **characterised in that** after complete processing of the at least two blocks (27), the next blocks (27) are processed by the control unit (13), wherein the next blocks (27) or pseudo-random blocks (27) are selected for this purpose.

4. Method according to any one of the preceding claims 1 to 3, **characterised in that** the processing of the lines (22) within the blocks (27) is performed from top to bottom or from bottom to top or pseudo-random ly.

5. Method according to one of the preceding claims 1 to 4, **characterised in that** the processing of a line (22) takes place from left to right or right to left or with alternating engraving direction.

6. Method according to one of the preceding claims 1 to 5, **characterised in that** all the blocks (27) specified are processed from top to bottom, wherein for example each first line (22) of each block (27) is processed first, whereupon the second line (22) of each block (27) is engraved and so on.

7. Laser plotter (2) with a processing area (8) for positioning a workpiece (7), at least one but preferably two irradiation sources (4) in the form of lasers (5,6), with corresponding deflecting elements (11) and a preferably movable focusing unit (12) and a control unit (13) for controlling the individual elements, in particular a carriage (21) with a focusing unit (12) arranged movably thereon, **characterised in that** the control unit (13) is designed to carry out the method according to one or several of claims 1 to 6.

8. Laser plotter (2) according to claim 7, **characterized in that** the control unit (13) is designed according to a sequence control adapted to the quality of the engraving, in which a defined ratio of a spot size (23) to the inter-line distance and an engraving sequence (1) of the lines (22) to be processed can be fixed or determined, respectively, and the focusing unit (12) on the carriage (21) can be controlled in accordance with the defined parameters of the sequence control.

9. Laser plotter (1) according to claim 7 or 8, **characterised in that** the control unit (13) is designed to process blocks (27).

## Revendications

1. Procédé de gravure, de marquage et/ou d'étiquetage d'une pièce (7) à l'aide d'un traceur laser (2), dans lequel une, de préférence plusieurs, en particulier deux sources de rayonnement (4) sous forme de lasers (5,6) situées dans un boîtier (3) du traceur laser (2) sont utilisées pour agir de préférence en alternance sur la pièce (7) à traiter, la pièce (7) étant déposée de façon bien définie sur un plateau de travail (9) et un faisceau laser (10) étant envoyé par la source de rayonnement (4) par le biais des éléments de déviation (11) à au moins une unité de mise au point (12) à partir de laquelle le faisceau laser (10) est dévié vers la pièce (7) et mise au point pour le traitement, la commande, notamment la commande de positionnement de la pièce (7) vers le faisceau laser (10) s'effectuant par le biais d'un logiciel fonctionnant dans une unité de commande (13), de sorte que la pièce (7) est traitée en ligne par le déplacement du chariot (21), **caractérisé en ce qu'**une commande séquentielle de l'unité de commande (13) adaptée à la qualité de la gravure pour laquelle un rapport défini entre la taille du point (23) et l'interligne et un processus de gravure (1) des lignes (22) à traiter sont déterminés ou exécutés, et l'unité de mise au point (12) au niveau du chariot (21) est commandée en fonction des paramètres définis de la commande séquentielle, et le processus de gravure (1) est réalisé en blocs de manière unidirectionnelle, dans lequel au moins deux blocs sont traités à la fois en alternance et dans lequel la direction de la gravure varie par bloc.

2. Procédé selon la revendication 1, **caractérisé en ce que** chaque bloc (27) est constitué au moins de deux, et en particulier de quatre à dix lignes (22).

3. Procédé selon l'une quelconque des revendications 1 ou 2 précédentes, **caractérisé en ce qu'**après traitement complet d'au moins deux blocs (27) par l'unité de commande (13) les blocs (27) suivants sont traités, les blocs (27) suivants ou des blocs (27) pseudo-aléatoires étant sélectionnés à cet effet.

4. Procédé selon l'une quelconque des revendications 1 à 3 précédentes, **caractérisé en ce que** le traitement des lignes (22) au sein des blocs (27) s'effectue du haut vers le bas ou du bas vers le haut ou de manière pseudo-aléatoire.

5. Procédé selon l'une quelconque des revendications 1 à 4 précédentes, **caractérisé en ce que** le traitement d'une ligne (22) s'effectue de gauche à droite ou de droite à gauche ou avec direction de gravure variable.

6. Procédé selon l'une quelconque des revendications 1 à 5 précédentes, **caractérisé en ce que** tous les blocs (27) définis sont traités du haut vers le bas, chaque première ligne (22) de chaque bloc (27) étant par exemple traitée d'abord, après quoi la deuxième ligne (22) de chaque bloc (27), etc. est gravée.

7. Traceur laser (2) avec une zone de travail (8) pour le positionnement de la pièce (7), au moins une, de préférence toutefois deux sources de rayonnement (4) sous forme de lasers (5,6), avec des éléments de déviation (11) correspondants et une unité de mise au point (12) de préférence mobile et une unité de commande (13) pour commander les différents éléments, notamment un chariot (21) sur lequel est fixé l'unité de mise au point (12) mobile, **caractérisé en ce que** l'unité de commande (13) pour réaliser le procédé est conçue selon une ou plusieurs des revendications 1 à 6.

8. Traceur laser (2) selon la revendication 7, **caractérisé en ce que** l'unité de commande (13) est conçue pour une commande séquentielle adaptée à la qualité de la gravure, pour laquelle un rapport défini entre la taille du point (23) et l'interligne et un processus de gravure (1) des lignes (22) à traiter peuvent être définis ou déterminés, et l'unité de mise au point (12) au niveau du chariot (21) peut être commandée conformément aux paramètres définis de la commande séquentielle.

9. Traceur laser (1) selon la revendication 7 ou 8, **caractérisé en ce que** l'unité de commande (13) est conçue pour traiter des blocs (27).
